Europäisches Patentamt

European Patent Office

Office européen des brevets

(11) Publication number: **0 168 912**
**A1**

## (12) EUROPEAN PATENT APPLICATION

(21) Application number: **85302763.9**

(22) Date of filing: **19.04.85**

(51) Int. Cl.⁴: **F 16 D 65/66**

(30) Priority: **24.04.84 GB 8410422**

(43) Date of publication of application: **22.01.86**
**Bulletin 86/4**

(84) Designated Contracting States: **DE FR GB IT**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Barnett, John Rendall, 50 Pembroke Gardens, Wellesbourne Warwickshire CV35 9PU (GB)**
Inventor: **Hales, Eric Charles, 80 Poplar Road Dorridge, Solihull West Midlands B93 8DG (GB)**

(74) Representative: **Cundy, Anthony Brian, Anthony Cundy & Company 384 Station Road Dorridge, Solihull West Midlands B93 8ES (GB)**

(54) **A drum brake hydraulic wheel cylinder assembly.**

(57) A drum brake hydraulic wheel cylinder assembly has a cylinder body (2) with opposed pistons (4), (5) and means for automatically adjusting the axial positions thereof during the course of brake wear comprising a co-axial assembly of screw-threaded stems (7) and nuts (9) carried thereby located in the cylinder (1) and normally nonrotatably engageable with the pistons (4), (5) under spring pressure, but rotatable when the stems are arrested by abutments (21), (22) to thereby allow rotation of the nuts on their stems to compensate for the said brake wear.

# HYDRAULIC WHEEL CYLINDER ASSEMBLIES

The invention relates to hydraulic wheel cylinder assemblies for internal shoe drum brakes and in particular to brakes of the kind in which the wheel cylinder assembly is interposed between one pair of adjacent ends of a pair of brake shoes and acts as a spacing strut for said ends and a mechanical expander and fixed abutment means are interposed between the other pair of adjacent ends of the shoes.

A brake drum and wheel cylinder assembly of the kind referred to is described in British Patent Specification No. 1 240 222. It incorporates a single piston and cylinder assembly there being provided a screw-threaded stem and a screw-threaded component carried thereon located within the piston with the component having a frusto-conical face spring-urged against a corresponding opposed face within the piston. The arrangement is such that limited linear axial movement of the component on the screw-threaded stem is provided by clearance in the screw-threads. Adjustment of the effective length of the piston assembly to compensate, during use, for wear of brake pads, is made possible by relative rotation of the stem and component under the action of the spring when the movement of the piston assembly operates to take up the clearance in the screw-threads and relieve the spring pressure on the said opposed faces. The present invention is an improvement or modification of this wheel cylinder assembly.

According to the invention there is provided a hydraulic wheel cylinder for an internal shoe drum brake incorporating a cylinder body having a through bore and a pair of pistons slidable in said bore, and means for each piston for automatically adjusting the axial positions taken up thereby comprising a screw-threaded stem carrying a correspondingly screw-threaded nut there being provided a face on one end of the nut normally in non-rotational engagement with a corresponding face on the associated piston, spring means for urging the faces into contact and for applying a relative rotational force to the stem and nut characterised by annular centralising means located co-axially around the ends of the stems remote from the pistons and within which the stem ends are non-rotationally slidable, abutments being provided on the centralising means, a first abutment intermediate its ends against which adjacent ends of the stem are locatable and second abutments one for each stem engageable therewith after a predetermined degree of axial stem movement has taken place, and means attached to the cylinder body for non-rotatably locating the centralising means axially of the said body, the operation of the adjustment means being such that upon the application of

-3-

hydraulic pressure to the pistons, the pistons together with their associated stems and nuts move axially apart to cause brake application, rotation of the nut upon the stem by the spring means being permitted when the abutments engage the stems to halt their movement thereby relieving contact between the said faces on the nuts and pistons.

Preferably the abutments provided are annular spring clips located in grooves. Preferably, also, there is provided a spring-loaded ball located in the cylinder body and urged into contact with a recess formed in the centralising means, a pin being attached to the said body engageable with a groove formed in the centralising means enabling axial movement but preventing rotational movement of the centralising means in the said body.

The invention will now be described by way of example and with reference to the accompanying drawings in which:

Figure 1 is a longitudinal cross-sectional view along the line A-A of Figure 2 of a hydraulic wheel cylinder assembly according to the invention.

Figure 2 is an end view of the assembly shown in figure 1.

and

Figure 3 is an enlarged scrap-sectional view of the central portion of figure 1.

The hydraulic wheel cylinder assembly 1 for location between one pair of adjacent ends of a pair of brake shoes comprises a cylinder body 2 having a through bore 3 housing a pair of opposed pistons 4, 5 slidable in the bore. An inlet port 6 is provided in the cylinder body communicating with the space between the pistons.

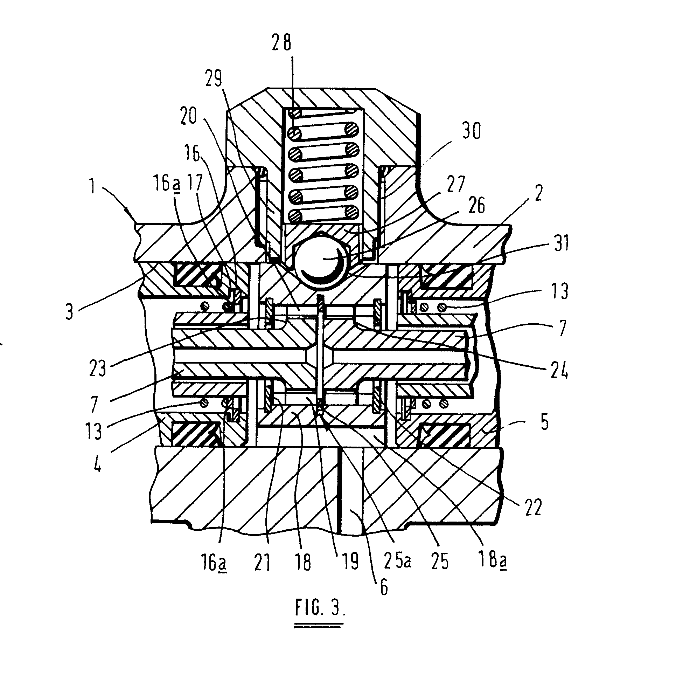

Means are provided for each piston for automatically adjusting the axial positions taken up thereby during the course of operation of the brake which results in wear of the brake shoes, the pistons taking successively further spaced-apart positions as wear ensues. One only of these means will be described where this will conveniently convey the details of the construction. The means includes a stem 7 having a screw-thread 8 which is in engagement with the corresponding screw-thread of a nut 9. The nut 9 has a face 10 of frusto-conical form having longitudinal grooves 11 on its surface and is urged into normally non-rotational engagement with a correspondingly frusto-conical face 12 formed on an interior surface of one of the pistons 4, 5, by means of a helical spring 13 mounted co-axially on the stem. The spring is disposed at one end against a shoulder 14 forming an abutment at the head of the nut 9, a pair of low-friction washers 15 being interposed. The spring at its other end is located in engagement with an annular spring clip 16 (see particularly Figure 3) which also forms an abutment and is located in a groove 17 formed in an internal surface of the piston 4, 5; once again a low-friction washer 16a is interposed between the clip 16 and the spring. The spring is in a compressed state, the formation of the screw-thread and the mounting of the spring providing a relative rotational force between nut and stem which operates, as will be described, to rotate the nut on the stem when the engagement of the frusto-conical surfaces is relieved.

An annular centralising means (see particularly Figure 3) in the form of an annular carrier 18 is slidably yet non-rotationally located in the bore 3 between the inner ends of pistons 4, 5 and co-axially around the inner ends of the stems 7. The internal surface of the carrier 18 is provided with a plurality of splines 19 engageable with the grooves between corresponding splines 20 formed on each of the stems, the stems thus being slidable in but not rotatable in the carrier. Abutments 21, 22 in the form of annular clips are located in grooves formed on the internal surface of the carrier (see particularly Figure 3) for engagement, as will be described, with shoulders 23, 24 formed adjacent to the inward ends of the stems 7, after a predetermined degree of axial stem movement has taken place.

A further abutment 25 in the form of an annular clip is located intermediate the ends of the carrier 18 in a groove 25a on its internal surface and serves to locate against the inward ends of the stems 7.

A cut-away 18a is formed on the carrier 18 to assist fluid entry to the bore 3.

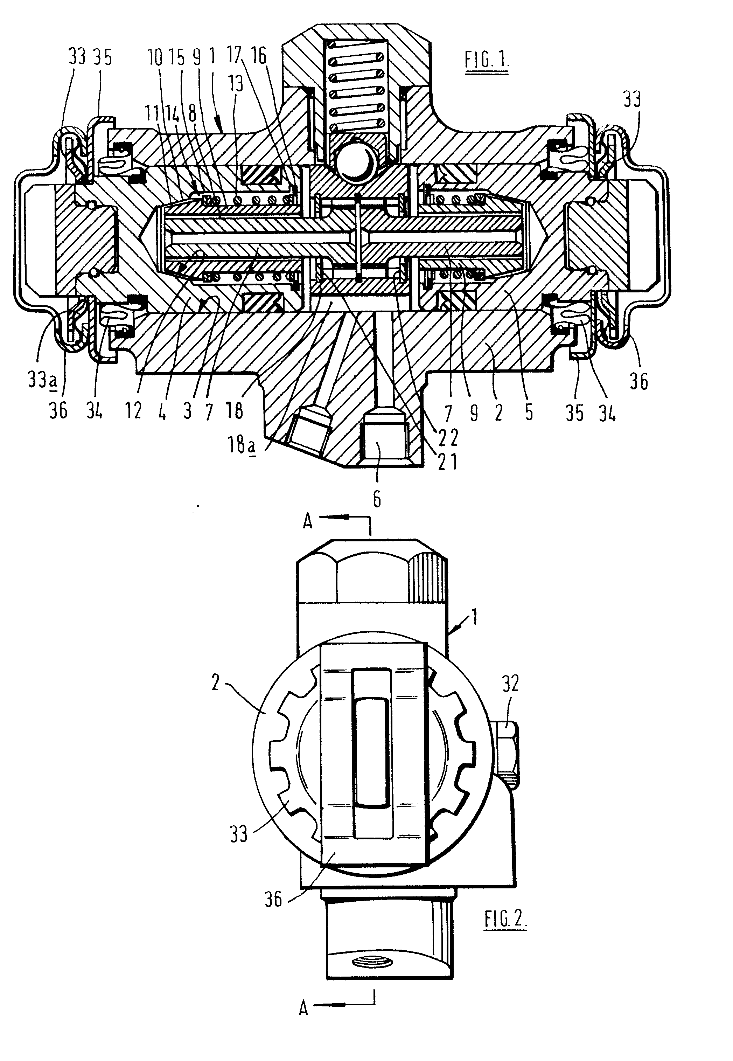

Means are attached exteriorly to the cylinder body for locating the carrier. They comprise a ball bearing 26, cap 27 and backing spring 28 located in a housing 29 screw-threaded into a tapped hole 30 formed in the cylinder body 2. The ball is urged by the spring into engagement with a ramp-like recess 31 formed on the external surface of the carrier 18. The spring-loaded ball acts to return the carrier to a central rest position following axial movement in either direction away from centre. The carrier is also non-rotatably located in the cylinder body by means of a hexagon-headed pin 32 (see Figure 2) screw-threaded into the body 2 and in engagement with a groove, not illustrated, formed axially on the said carrier.

An adjustment wheel 33 (Figures 1 and 2) is rigidly attached to the end of each piston 4, 5 serving to rotate the piston while it is in engagement with the nut for adjustment, for example, when setting up the brakes, a star form (see Figure 2) being provided on its exterior surface to assist grip and for engagement with a spring 33a which prevents wheel rotation caused by vibration (see Figure 1).

Flexible end seals 34 are located between the ends of the piston and cylinder at each end of the body to prevent the ingress of foreign bodies and a protection cap 35 assists this function. A further plate 36 serves as a partial shroud for the star-shaped wheel.

Other hydraulic seals are provided as is customary in wheel cylinder construction.

In operation the adjustment means provided in the wheel cylinder just described acts, when hydraulic pressure is applied through the inlet port 6, to cause the pistons 4, 5, together with their associated stems 7 and nuts 9 to move axially apart to effect brake application, the force developed by the piston being applied to the adjacent end of a pair of brake shoes. When the degree of axial movement of the stem nut and piston is sufficient to cause engagement of the abutments 21, 23 and 22, 24 further movement, e.g. caused by brake wear, causes movement of the stems 7 to be halted to relieve contact between the frusto-conical faces 10 and 12 formed respectively on the nuts and pistons. The nuts being subject to rotational force by the springs 13 are then caused to rotate to screw the nuts outwardly on the stems until the frusto-conical faces re-engage thereby automatically taking up the additional movement caused by wear. Re-engagement of the faces 10 and 12 under spring pressure restores the non-rotational relationship of the nuts on their stems so that when the brake pressure is relieved the nuts and stems remain in their adjusted state to re-locate the axial positions taken up by the pistons to accord with the brake wear.

It will be appreciated that the frusto-conical faces on nuts and pistons can, in an alternative design, be of annular form.

Adjustments which may be necessary in service or on initial setting up can be achieved by operating the star-shaped wheel 33.

0168912

CLAIMS

1.      A hydraulic wheel cylinder for an internal shoe brake incorporating a cylinder body (2) having a through bore (3) and a pair of pistons (4,5) slidable in said bore, and means for each piston for automatically adjusting the axial positions taken up thereby comprising stem (7)  and a screw-threaded nut (9) there being provided a face (10) on one end of the nut (9) normally in non-rotational engagement with a corresponding face (12) on the associated piston, spring means (13) for urging the faces into contact and for applying a relative rotational force to the stem (7) and nut (9) characterised by annular centralising means (18) located co-axially around the ends of the stems (7) remote from the pistons (4,5) and within which the stem ends are non-rotationally slidable, abutments being provided on the centralising means, a first abutment (25) intermediate its ends against which adjacent ends of the stem (7) are locatable and second abutments (21,22) one for each stem engageable therewith after a predetermined degree of axial stem movement has taken place, and means (32) attached to the cylinder body for non-rotatably locating the centralising means axially of the said body, the operation of the adjustment means being such that upon the application of hydraulic pressure to the pistons (4,5),  the pistons together with their associated stems (7) and nuts (9) move axially apart to cause brake application, rotation of the nut (9) upon the stem (7) by the spring means (13) being permitted when the abutments (21,22) engage the stems to halt their movement thereby relieving contact between the said faces (10,12) on the nuts (9) and pistons (4,5).

2. A hydraulic wheel cylinder according to claim 1 wherein the abutments (21,22,25) are annular spring clips located in grooves and thereby secured against axial movement.

3. A hydraulic wheel cylinder according to claim 1 or 2 wherein the means for non-rotatably locating the centralising means (18) axially of the cylinder body (2) comprises a spring-loaded ball (26) located in the said body (2) and urged into contact with a recess (31) formed in the centralising means (18) and a pin (32) attached to the said body engageable with a groove formed in the centralising means enabling axial movement but preventing rotational movement of the centralising means (18) in the said body (2).

4. A hydraulic wheel cylinder according to any preceding claim wherein the spring means (13) for urging the faces into contact comprises a helical spring mounted under compression on the said stem (7) in engagement at one end with an abutment (16) carried by its associated piston and at the other end in engagement with a shoulder (14) formed on the nut, a washer (15) for assisting free rotation of the nut being interposed between shoulder and spring.

5. A hydraulic wheel cylinder according to any preceding claim wherein the face (10) on the end of the nut (9) is of frusto-conical form there being provided grooves (11) on the frusto-conical face (10) to reduce the contact area.

6. A hydraulic wheel cylinder according to any preceding claim wherein there is provided, attached to the end of each piston (4,5) adjacent to the end of the cylinder body (2) an adjustment wheel (33) for rotating the piston (4,5) while in engagement with the nut (9).

7. A hydraulic wheel cylinder according to any preceding claim wherein there is provided for each piston (4,5) a flexible end seal (34) located between the ends of the piston (4,5) and cylinder body (2).

8. A hydraulic wheel cylinder according to claim 7 wherein there is provided a cap (35) for each piston (4,5) attached to the end of the piston (4,5) to shroud the seal (34).

0168912

$^1/_2$

FIG. 1.

FIG. 2.

FIG. 3.

0168912

0168912
Application number

**European Patent Office**

**EUROPEAN SEARCH REPORT**

| DOCUMENTS CONSIDERED TO BE RELEVANT | | | EP 85302763.9 | |
|---|---|---|---|---|
| Category | Citation of document with indication. where appropriate, of relevant passages | Relevant to claim | CLASSIFICATION OF THE APPLICATION (Int. Cl 4) | |
| A | DE - B1 - 2 603 109 (KNORR-BREMSE GMBH) * Totality * -- | 1 | F 16 D 65/66 | |
| A | DE - A1 - 2 526 213 (KNORR-BREMSE GMBH) * Totality * -- | 1 | | |
| A | FR - A1 - 2 285 549 (KNORR-BREMSE GMBH) * Fig. 1 * -- | 1 | | |
| A | GB - A - 2 080 894 (LUCAS INDUS-TRIES LTD.) * Fig. 3 * -- | 7,8 | TECHNICAL FIELDS SEARCHED (Int. Cl 4) | |
| A | DE - A1 - 2 538 328 (S.A. D.B.A.) * Fig. 1 * ---- | | F 16 D 65/00 | |

The present search report has been drawn up for all claims

| Place of search | Date of completion of the search | Examiner |
|---|---|---|
| VIENNA | 08-07-1985 | KAMMERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82